# EUROPEAN PATENT APPLICATION

(11) **EP 4 586 442 A1**
(43) Date of publication of application: **16.07.2025**
(21) Application number: 23870787.1
(22) Date of filing: 26.09.2023
(51) Int. Cl.: H02J 3/48, H02J 3/50, H02J 3/24, H02J 3/00

(54) **GRID-TIE INVERTER SYSTEM AND LOW-FREQUENCY OSCILLATION SUPPRESSION METHOD**

(30) Priority: 29.09.2022 CN 202211200465
(71) Applicant: Huawei Digital Power Technologies Co., Ltd., Shenzhen, Guangdong 518043 (CN)
(72) Inventor: SHAO, Zhangping, Shenzhen, Guangdong 518043 (CN); YANG, Haitao, Shenzhen, Guangdong 518043 (CN); XIN, Kai, Shenzhen, Guangdong 518043 (CN)
(74) Representative: Epping - Hermann - Fischer
(86) International application number: PCT/CN2023/121476
(87) International publication number: WO 2024/067558

(57) **Abstract**

This application discloses a grid connection inverter system and a low-frequency oscillation suppression method. The system includes a converter, an additional damping controller, a sampling circuit, and a controller. The converter is connected to a direct current input end, a power grid, the controller, and the sampling circuit, the sampling circuit is connected to the additional damping controller, and the controller is connected to the additional damping controller. The converter is configured to output a grid connection voltage, a grid connection current, and power to the power grid. The sampling circuit is configured to detect the grid connection voltage, the grid connection current, and a power grid frequency of the power grid. The additional damping controller is configured to output a power additional value to the controller based on the grid connection voltage and the power grid frequency when the power grid is in a low-frequency oscillation state, where the power additional value includes an active power additional value and a reactive power additional value. The controller is configured to adjust, based on the power additional value, reactive power and active power that are output by the converter. In this application, the output power of the converter is adjusted based on the power additional value, to suppress low-frequency oscillation and reduce grid connection voltage fluctuation and an energy yield loss.

## Description

### CROSS-REFERENCE TO RELATED APPLICATIONS

This application claims priority to Chinese Patent Application No. 202211200465.2, filed with the China National Intellectual Property Administration on September 29, 2022 and entitled "GRID CONNECTION INVERTER SYSTEM AND LOW-FREQUENCY OSCILLATION SUPPRESSION METHOD", which is incorporated herein by reference in its entirety.

### TECHNICAL FIELD

This application relates to the field of new energy power generation control, and in particular, to a grid connection inverter system and a low-frequency oscillation suppression method.

### BACKGROUND

As a proportion of new energy increases, a low-frequency oscillation phenomenon frequently occurs in a power grid in a case of long-distance and heavy-load power transmission. The low-frequency oscillation phenomenon is a continuous oscillation phenomenon caused by lack of damping in relative swing between rotors of a generator. Low-frequency power oscillation may cause out-of-step oscillation of a synchronous generator, and further lead to system islanding. This greatly threatens secure and stable operation of the power grid.

The conventional low-frequency oscillation suppression technology may lead to a sharp change of a grid connection voltage in the power grid, resulting in voltage threshold crossing and affecting a response capability of a power station to a transient overvoltage. In addition, some other existing low-frequency oscillation suppression technologies may cause a large energy yield loss.

Therefore, how to avoid voltage threshold crossing and reduce an energy yield loss in a process of suppressing low-frequency oscillation is an urgent problem to be resolved currently.

### SUMMARY

This application provides a grid connection inverter system and a low-frequency oscillation suppression method, to resolve problems of voltage threshold crossing and an energy yield loss in a process of suppressing low-frequency oscillation in the conventional technology.

According to a first aspect, an embodiment of this application provides a grid connection inverter system, including a converter, an additional damping controller, a sampling circuit, and a controller, where the converter is separately connected to a direct current input end, a power grid, the controller, and the sampling circuit, the sampling circuit is connected to the additional damping controller, and the controller is connected to the additional damping controller;
the converter is configured to output a grid connection voltage, a grid connection current, reactive power, and active power to the power grid;
the sampling circuit is configured to collect the grid connection voltage, the grid connection current, and a power grid frequency of the power grid;
the additional damping controller is configured to: when the power grid is in a low-frequency oscillation state, output a power additional value to the controller based on the grid connection voltage and the power grid frequency, where the power additional value includes an active power additional value and a reactive power additional value; and
the controller is configured to adjust, based on the power additional value, the reactive power and the active power that are output by the converter.

In the grid connection inverter system, when the power grid is in a low-frequency oscillation state, the controller can adjust, based on the power additional value, the reactive power and the active power that are output by the converter, to avoid a sharp fluctuation of a grid connection voltage caused by a variation of the reactive power. In this way, security of the power grid is ensured. The reactive power may be further used in a process of suppressing low-frequency oscillation as much as possible, in other words, a variation of the active power is reduced, to reduce an energy yield loss caused by an active power change.

In a possible implementation, the controller is configured to:
adjust, based on the reactive power additional value, a reactive power reference value of the reactive power output by the converter, and adjust, based on the active power additional value, an active power reference value of the active power output by the converter, where a power reference value includes the reactive power reference value and the active power reference value; and
control, based on the grid connection current, the grid connection voltage, and a power reference value obtained through adjustment, the converter to output the reactive power and the active power.

In this implementation, the grid connection inverter system may determine a power reference value of output power of the converter, to further control the converter to output corresponding power.

In a possible implementation, the controller is configured to:
when the grid connection voltage is within a specified voltage range and a reactive power reference value obtained through adjustment is less than or equal to a specified reactive power threshold, clear the active power additional value.

Based on the foregoing grid connection inverter system, when the grid connection voltage is within the specified voltage range, that is, when the power grid is safe, and the reactive power that can be provided by the converter can meet a requirement of suppressing low-frequency oscillation of the power grid, the converter outputs the reactive power, and clears the active power additional value, to reduce an energy yield loss caused by an active power change.

In a possible implementation, the controller is configured to:
when the grid connection voltage is within the voltage range and the reactive power reference value obtained through adjustment is greater than the reactive power threshold, adjust the reactive power reference value to be equal to the reactive power threshold.

Based on the foregoing grid connection inverter system, when the grid connection voltage is within a voltage range, that is, in a case in which security of the power grid is ensured, if the reactive power reference value obtained through adjustment is greater than the reactive power threshold, that is, if the reactive power that can be provided by the converter cannot meet a requirement of suppressing low-frequency oscillation of the power grid, the active power needs to be changed to achieve better low-frequency oscillation suppression effect. Because the converter outputs reactive power that meets the reactive power threshold to suppress low-frequency oscillation, a variation based on the active power can be reduced as much as possible, to reduce an energy yield loss.

In a possible implementation, the controller is configured to:
When the grid connection voltage is within the voltage range, the reactive power reference value obtained through adjustment is greater than the reactive power threshold, and the grid connection voltage is not within the voltage range, clear the reactive power additional value.

Based on the foregoing grid connection inverter system, when the grid connection voltage is not within the voltage range, the reactive power additional value is cleared, to reduce the variation of the reactive power output by the converter, so that the grid connection voltage is restored to a proper range. This avoids sharp fluctuation of the grid connection voltage and threshold-crossing of the grid connection voltage that are caused by a reactive power change.

In a possible implementation, the controller is further configured to:
send an operation instruction to the damping controller when the power grid frequency is within a target frequency range, where the operation instruction instructs the power grid to enter the low-frequency oscillation state.

In a possible implementation, the target frequency range is adjusted based on a low-frequency oscillation frequency range and a frequency fluctuation offset value of the power grid.

According to a second aspect, this application further provides a low-frequency oscillation suppression method, applied to a grid connection inverter system. The grid connection inverter system includes a converter, an additional damping controller, a sampling circuit, and a controller, where the converter is separately connected to a direct current input end, a power grid, the controller, and the sampling circuit, the sampling circuit is connected to the additional damping controller, and the controller is connected to the additional damping controller; and the method includes:
outputting, by the converter, a grid connection voltage, a grid connection current, reactive power, and active power to the power grid;
collecting, by the sampling circuit, the grid connection voltage, the grid connection current, and a power grid frequency of the power grid;
when the power grid is in a low-frequency oscillation state, outputting, by the additional damping controller, a power additional value to the controller based on the grid connection voltage and the power grid frequency, where the power additional value includes an active power additional value and a reactive power additional value; and
adjusting, by the controller based on the power additional value, the reactive power and the active power that are output by the converter.

In a possible implementation, the adjusting, based on the power additional value, the reactive power and the active power that are output by the converter includes:
adjusting, by the controller based on the reactive power additional value, a reactive power reference value of the reactive power output by the converter, and adjusting, based on the active power additional value, an active power reference value of the active power output by the converter, where a power reference value includes the reactive power reference value and the active power reference value; and
controlling, based on the grid connection current, the grid connection voltage, and a power reference value obtained through adjustment, the converter to output the reactive power and the active power.

In a possible implementation, the method further includes:
when the grid connection voltage is within a specified voltage range and a reactive power reference value obtained through adjustment is less than or equal to a specified reactive power threshold, clearing, by the controller, the active power additional value.

In a possible implementation, the method further includes:
when the grid connection voltage is within the voltage range and the reactive power reference value obtained through adjustment is greater than the reactive power threshold, adjusting, by the controller, the reactive power reference value to be equal to the reactive power threshold.

In a possible implementation, the method further includes:
clearing, by the controller, the reactive power additional value when the grid connection voltage is not within the voltage range.

In a possible implementation, the method further includes:
sending, by the controller, an operation instruction to the damping controller when the power grid frequency is within a target frequency range, where the operation instruction instructs the power grid to enter the low-frequency oscillation state.

In a possible implementation, the target frequency range is adjusted based on a low-frequency oscillation frequency range and a frequency fluctuation offset value of the power grid.

### BRIEF DESCRIPTION OF DRAWINGS

FIG. 1 is a diagram of a structure of a photovoltaic power grid;
FIG. 2 is a diagram of a structure of a grid connection inverter system according to an embodiment of this application;
FIG. 3 is a diagram of a specific structure of a grid connection inverter system according to an embodiment of this application;
FIG. 4 is a schematic flowchart of a low-frequency oscillation suppression method according to an embodiment of this application;
FIG. 5 is a schematic flowchart of another low-frequency oscillation suppression method according to an embodiment of this application;
FIG. 6 is a schematic flowchart of another low-frequency oscillation suppression method according to an embodiment of this application;
FIG. 7 is a schematic flowchart of another low-frequency oscillation suppression method according to an embodiment of this application; and
FIG. 8 is a schematic flowchart of another low-frequency oscillation suppression method according to an embodiment of this application.

### DESCRIPTION OF EMBODIMENTS

To make the purpose, technical solutions, and advantages of this application clearer, the following clearly and completely describes the technical solutions of embodiments of this application with reference to the accompanying drawings in embodiments of this application.

For ease of understanding embodiments of this application, the following first describes some terms included in embodiments of this application.

### 1. Low-frequency oscillation

Low-frequency oscillation of a power grid is a continuous oscillation phenomenon caused by lack of damping in relative swing between rotors of a generator. A low-frequency oscillation frequency of the power grid generally ranges from 0.1 Hz to 2.5 Hz. The low-frequency oscillation may cause out-of-step oscillation of a synchronous generator, and further leads to islanding of the power grid, thereby greatly threatening secure and stable operation of the power grid.

### II. Active power and reactive power

Power output by the power grid includes two parts: active power and reactive power.

The active power: An electrical device directly consumes electric energy and converts the electric energy into mechanical energy, thermal energy, chemical energy, or acoustic energy. Such energy is used for working, and this part of power of the electrical device is referred to as the active power.

The reactive power: The electrical device consumes no electric energy, but only converts the electric energy into another form of energy. Such energy is an essential condition for the electrical device to work, and such energy can be periodically converted into electric energy in the power grid. Such energy is used for working, and this part of power of the electrical device is referred to as the reactive power, for example, electric energy occupied by an electromagnetic element to establish a magnetic field, and electric energy occupied by a capacitive element to establish an electric field.

In addition, it should be understood that terms "first" and "second" in embodiments of this application are merely used for a purpose of description, and cannot be understood as an indication or implication of relative importance or an implicit indication of a quantity of indicated technical features. Therefore, a feature limited by "first" or "second" may explicitly or implicitly include one or more features. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c.

At present, a low-frequency oscillation suppression method for a power grid mainly includes a reactive power suppression method, an active power suppression method, and an active and reactive power integrated suppression method.

When the reactive power suppression method is used to suppress low-frequency oscillation, because the power grid connection standard requires that a converter need to have a power grid voltage support function, a large reactive power change in a weak power grid may cause a sharp change of a grid connection voltage, or even cause voltage threshold crossing. This affects a response capability of the power grid to a transient overvoltage.

When the active power suppression method is used, the converter is in a maximum power point tracking (maximum power point tracking, MPPT) state for most of the time. Generally, input power is calculated by detecting an input voltage and an input current in real time, so that a system tracks a maximum input power point according to some preset control algorithms. However, some control algorithms do not have a power control capability, and some control algorithms require the converter to reduce power by half and then reserve the power to participate in damping oscillation. In this case, when the power is restored, new oscillation may occur, and a large energy yield loss may be caused. Some control algorithms only have a capability of reducing power of the converter, and may also cause a large energy yield loss.

When the active and reactive power integrated suppression method is used, there are various coordinated suppression methods, but not all of the current coordinated suppression methods can reduce grid connection voltage fluctuation and an energy yield loss when being used to suppress low-frequency oscillation.

Based on the foregoing problem, embodiments of this application provide a grid connection inverter system and a low-frequency oscillation suppression method, to avoid problems of grid connection voltage threshold crossing and an energy yield loss that are caused by suppression of low-frequency oscillation.

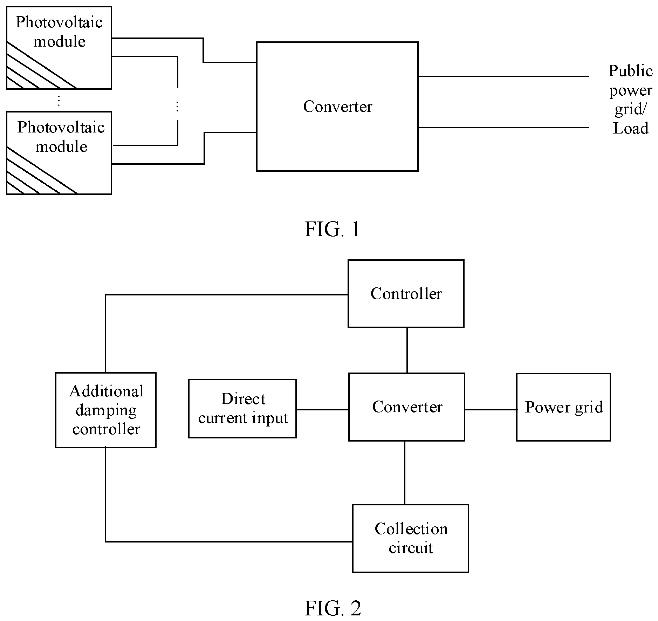

It should be understood that embodiments of this application may be applied to a power grid. The power grid may be a photovoltaic power grid, or a hybrid power grid including another energy manner (for example, wind power). The power grid may be any power grid including a converter or a device having a function similar to that of the converter, for example, a photovoltaic inverter or an energy storage converter. This is not specifically limited in embodiments of this application. For ease of description, the photovoltaic power grid is used as an example in embodiments of this application. The photovoltaic power grid converts a direct current generated by a photovoltaic module into an alternating current that meets a requirement of the power grid through the converter, and then provides the alternating current to a public power grid or a load for supplying power. FIG. 1 is a diagram of a structure of a photovoltaic power grid. As shown in FIG. 1, the photovoltaic power grid generally includes devices such as a photovoltaic module and a converter, and is connected to a public power grid or a load. The converter is configured to: convert a direct current into an alternating current, and supply the alternating current to the public power grid or the load.

The following describes the grid connection inverter system provided in example implementations of this application with reference to the foregoing described application scenario and accompanying drawings. It should be noted that the foregoing application scenario is merely shown for ease of understanding the spirit and a principle of this application, an implementation of this application is not limited in this aspect.

FIG. 2 is a diagram of a structure of a grid connection inverter system according to an embodiment of this application. The grid connection inverter system includes a converter, an additional damping controller, a sampling circuit, and a controller. The converter is separately connected to a direct current input end, a power grid, the controller, and the sampling circuit. The sampling circuit is connected to the additional damping controller, and the controller is connected to the additional damping controller.

The following describes the grid connection inverter system in detail with reference to the foregoing apparatus composition and connection relationship.

The converter is configured to output a grid connection voltage, a grid connection current, reactive power, and active power to the power grid.

The sampling circuit is configured to detect the grid connection voltage, the grid connection current, and a power grid frequency of the power grid.

The additional damping controller is configured to: when the power grid is in a low-frequency oscillation state, output a power additional value to the controller based on the grid connection voltage and the power grid frequency.

The controller is configured to: adjust, based on a reactive power additional value, a reactive power reference value of the reactive power output by the converter, and adjust, based on an active power additional value, an active power reference value of the active power output by the converter; and control, based on the grid connection current, the grid connection voltage, and a power reference value obtained through adjustment, the converter to output the reactive power and the active power.

It should be understood that the collected grid connection voltage of the converter may be a port voltage of the converter, the grid connection current may be a port current of the converter, and the power grid frequency may be a port current frequency of the converter. The grid connection voltage and the grid connection current in this solution are not limited to an analog signal at a grid-connected point, for example, an analog signal at a contact line. An analog signal for determining and suppressing low-frequency oscillation should be understood as an analog signal collected in this application, for example, an analog signal like a voltage, a current, a frequency, and power.

It should be noted that the power additional value includes the reactive power additional value and the active power additional value, and the power reference value includes the reactive power reference value and the active power reference value. Further, adjusting the reactive power reference value means superimposing the current reactive power reference value and the reactive power additional value. Similarly, adjusting the active power reference value means superimposing the current active power reference value and the active power additional value.

A method for processing an analog signal is not specifically limited in this application. A grid connection voltage at the grid-connected point is used as an example. The sampling module may process, based on an instantaneous voltage amplitude calculation algorithm, a voltage analog signal at a grid-connected point of a power plant at the current moment, or may process, based on a conventional Fourier calculation algorithm, a voltage analog signal at a grid-connected point at the current moment, and determine an instantaneous voltage amplitude at the grid-connected point at the current moment as the grid connection voltage.

Optionally, the controller may determine the low-frequency oscillation state in, but not limited to, the following manners.

When the power grid frequency received by the controller is within a target frequency range, it is determined that the power grid enters the low-frequency oscillation state. The target frequency range may be determined based on a low-frequency oscillation frequency range and a frequency fluctuation offset value of the power grid. The frequency fluctuation offset value may be a preset value of a user. The user may properly adjust the low-frequency oscillation frequency range based on a difference between an actual operating status of the power grid and an actual apparatus specification, to more accurately respond to a low-frequency oscillation phenomenon in time.

The low-frequency oscillation frequency range is properly adjusted based on the difference between the actual operating status of the power grid and the actual apparatus specification, so that the grid connection inverter system provided in this solution can more accurately respond to the low-frequency oscillation phenomenon in time.

In a possible implementation, when the grid connection voltage is within a specified voltage range and the reactive power reference value is less than or equal to a specified reactive power threshold, the controller clears the active power additional value, and controls, based on the grid connection current, the grid connection voltage, and a power reference value obtained through adjustment, the converter to output the reactive power and the active power. Grid connection voltage fluctuation of the power grid can be stabilized in the foregoing control process, so that in a case in which the power grid is safe, reactive power output is first changed based on the reactive power reference value to suppress low-frequency oscillation without changing the active power. This reduces a variation of the active power, to avoid an energy yield loss.

In a possible implementation, if in the suppression process, the grid connection voltage is within the specified voltage range and a reactive power reference value obtained through adjustment is greater than the specified reactive power threshold, the controller may further adjust the reactive power reference value to be equal to the reactive power threshold, and control, based on the grid connection current, the grid connection voltage, and the power reference value obtained through adjustment, the converter to output the reactive power and the active power. As reactive power that meets the reactive power reference value cannot be output, and only reactive power that meets the reactive power threshold can be output, active power that meets the active power reference value needs to be output to achieve better low-frequency oscillation suppression effect. The controller adjusts the active power reference value based on a received active power additional value obtained through reactive power suppression, and further controls the converter to output the reactive power and the active power.

Different from a conventional active and reactive power integrated suppression manner in which the active power reference value and the reactive power reference value are calculated after the low-frequency oscillation state is detected, and the converter is controlled based on the calculated reference values to suppress low-frequency oscillation, the grid connection inverter system in this application may change the reactive power output based on the reactive power reference value to perform the low-frequency oscillation on the power grid, and then adjust the active power reference value based on the grid connection voltage and the grid connection current that are obtained after the reactive power suppression, to perform active power suppression on the low-frequency oscillation. Therefore, compared with the conventional active and reactive power integrated suppression manner, the grid connection inverter system uses the reactive power in a low-frequency oscillation suppression process as much as possible, thereby reducing a variation of the active power, and reducing an energy yield loss.

In a possible implementation, when the grid connection voltage is not within the voltage range, the controller clears the reactive power additional value, and controls, based on the grid connection current, the grid connection voltage, and the power reference value obtained through adjustment, the converter to output the reactive power and the active power. This can avoid a problem of grid connection voltage threshold crossing in a weak power grid due to great reactive power fluctuation, and further ensures security of the power grid.

Further, when the grid connection voltage is not within the voltage range, if the active power reference value obtained through adjustment is less than or equal to the specified active power threshold, the controller controls, based on the grid connection current, the grid connection voltage, and the power reference value obtained through adjustment, the converter to output the reactive power and the active power. If the active power reference value obtained through adjustment is greater than the specified active power threshold, the controller adjusts the active power reference value to be equal to the active power threshold, and controls, based on the grid connection current, the grid connection voltage, and the power reference value obtained through adjustment, the converter to output the reactive power and the active power. The foregoing method can suppress the low-frequency oscillation phenomenon of the power grid by controlling the output active power of the converter while avoiding grid connection voltage threshold crossing and ensuring security of the power grid.

It should be noted that the voltage range may be a voltage range determined based on a low-voltage fault triggering threshold and a high-voltage fault triggering threshold of a power grid standard, or may be a voltage range specified based on a user requirement. For example, to further ensure security of the power grid, the user adjusts the voltage range determined based on the low voltage fault triggering threshold and the high voltage fault triggering threshold with reference to an actual operating status of the power grid, to obtain a more secure voltage range.

In addition, the specified reactive power threshold may be a maximum reactive power reference value limited by a converter specification, or may be a reactive power threshold that is set based on a user requirement. For example, if the user plans to use 50% of the reactive power for suppression of low-frequency oscillation, a corresponding reactive power threshold is set to 50% of the reactive power. The active power threshold is set similarly. Details are not described herein again. Maximum active power and maximum reactive power that can be output are determined by setting the active power threshold and the reactive power threshold. It should be understood that the active power threshold and the reactive power threshold in this application are maximum values of power that can be output. For example, if the maximum active power that can be output includes positive 50 kW and negative 50 kW, the active power threshold is set to 50 kW.

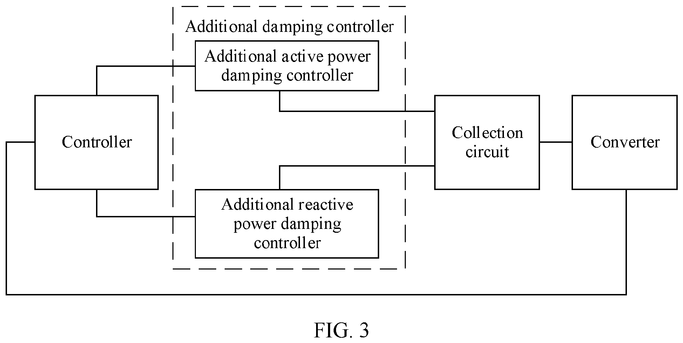

The following further describes a structure of the grid connection inverter system in FIG. 2 with reference to FIG. 3.

Optionally, as shown in FIG. 3, the additional damping controller may include an additional active power damping controller and an additional reactive power damping controller. The additional active power damping controller is separately connected to the controller and a collection circuit, and the additional reactive power damping controller is separately connected to the controller and the collection circuit.

The additional active power damping controller is configured to: after detecting that low-frequency oscillation occurs in a power grid, output an active power additional value based on a pre-stored internal algorithm, a grid connection voltage of the converter, and a power grid frequency, to further adjust a current active power reference value via the controller. The additional reactive power damping controller is configured to: after detecting that low-frequency oscillation occurs in the power grid, output a reactive power additional value based on a pre-stored internal algorithm, a grid connection voltage of the converter, and a power grid frequency, to further adjust a current reactive power reference value via the controller.

It should be noted that the controller and the collection circuit may be used in the power grid after being encapsulated, or may be integrated into a power plant-end power control apparatus or the converter, where the power plant-end power control apparatus may be a power plant controller (power plant controller, PPC), a power generator controller (power generator controller, PGC), a new energy frequency modulation or voltage adjustment apparatus, an automatic generation control (automatic generation control, AGC) or automatic voltage control (AVC) system, a supervisory control and data acquisition (supervisory control and data acquisition, SCADA) system, or another apparatus that can perform coordinated control on power of the power grid. This is not specifically limited in embodiments of this application.

Based on a same technical concept, an embodiment of this application further provides a low-frequency oscillation suppression method. The low-frequency oscillation suppression method may be applied to the grid connection inverter system shown in FIG. 2 or a grid connection inverter system with a function structure similar to that of the grid connection inverter system in FIG. 2. With reference to the accompanying drawings and the foregoing grid connection inverter system, the following further describes a low-frequency oscillation suppression method provided in this application.

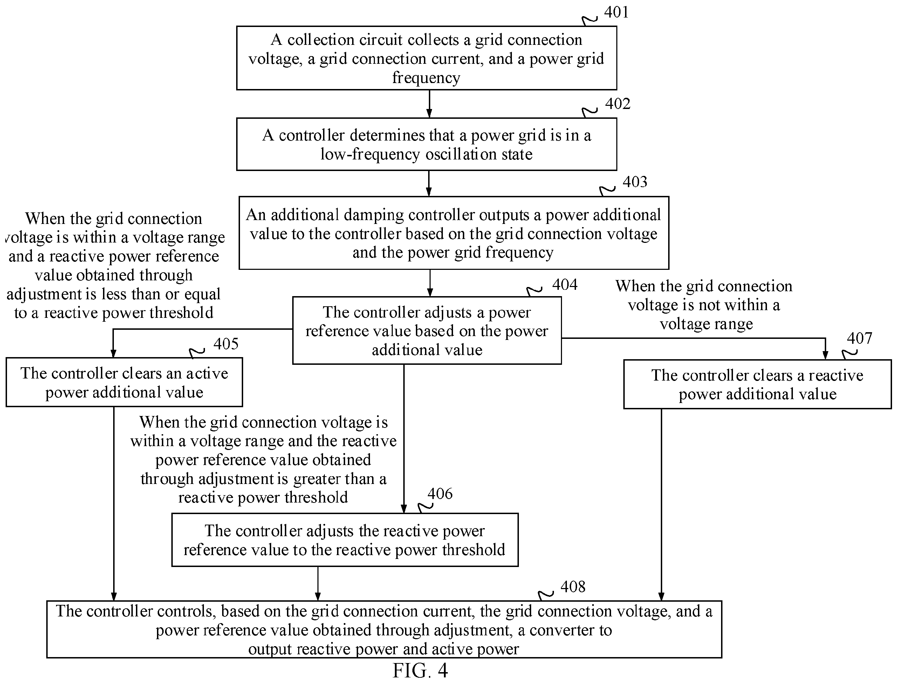

FIG. 4 is a schematic flowchart of a low-frequency oscillation suppression method according to an embodiment of this application. The method includes the following steps.

Step 401: A collection circuit collects a grid connection voltage, a grid connection current, and a power grid frequency.

Step 402: A controller determines that a power grid is in a low-frequency oscillation state.

Step 403: An additional damping controller outputs a power additional value to the controller based on the grid connection voltage and the power grid frequency.

Step 404: The controller adjusts a power reference value based on the power additional value. When the grid connection voltage is within a voltage range, and a reactive power reference value obtained through adjustment is less than or equal to a reactive power threshold, step 405 is performed. When the grid connection voltage is within a voltage range, and a reactive power reference value obtained through adjustment is greater than a reactive power threshold, step 406 is performed. When the grid connection voltage is not within a voltage range, step 407 is performed.

Step 405: The controller clears an active power additional value.

Step 406: The controller adjusts the reactive power reference value to the reactive power threshold.

Step 407: The controller clears a reactive power additional value.

Step 408: The controller controls, based on the grid connection current, the grid connection voltage, and a power reference value obtained through adjustment, a converter to output reactive power and active power.

It should be noted that a sequence of the steps in the accompanying drawings in this application may be set based on a user requirement, provided that same technical effect is achieved. The figure is merely an example, and details are not described again below.

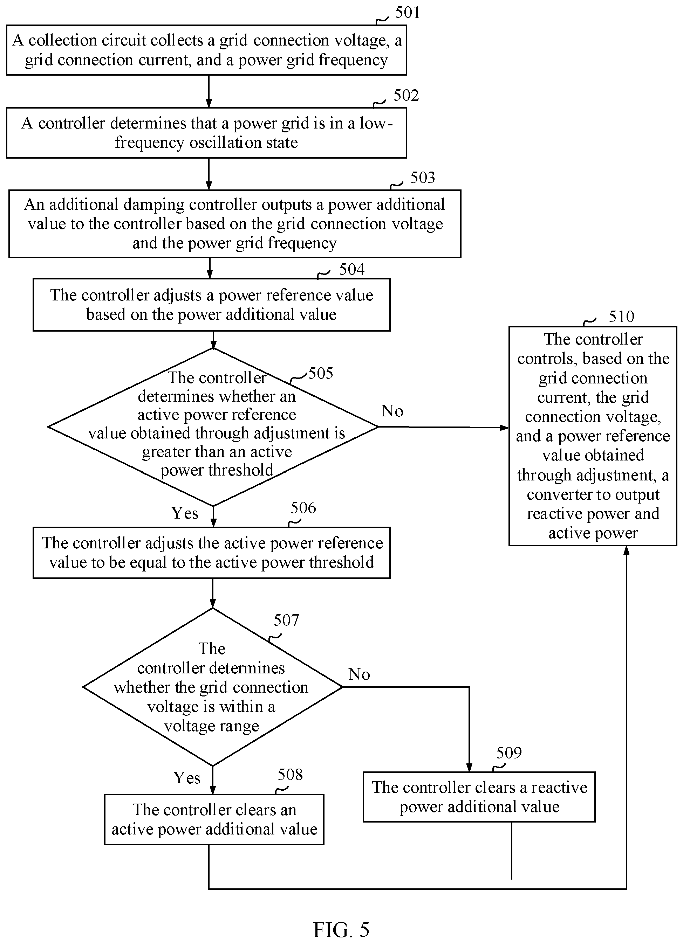

In a possible embodiment, an embodiment of this application provides another low-frequency oscillation suppression method. In the method, active power and reactive power are used to suppress low-frequency oscillation, and the active power is preferentially used to suppress the low-frequency oscillation. FIG. 5 is a schematic flowchart of another low-frequency oscillation suppression method according to an embodiment of this application. The method includes the following steps.

Step 501: A collection circuit collects a grid connection voltage, a grid connection current, and a power grid frequency.

Step 502: A controller determines that a power grid is in a low-frequency oscillation state.

Step 503: An additional damping controller outputs a power additional value to the controller based on the grid connection voltage and the power grid frequency.

Step 504: The controller adjusts a power reference value based on the power additional value.

Step 505: The controller determines whether an active power reference value obtained through adjustment is greater than an active power threshold, and performs step 506 if the active power reference value obtained through adjustment is greater than the active power threshold, or performs step 510 if the active power reference value obtained through adjustment is not greater than the active power threshold.

Step 506: The controller adjusts the active power reference value to be equal to the active power threshold, and performs step 507.

Step 507: The controller determines whether the grid connection voltage is within a voltage range, and performs step 508 if the grid connection voltage is within the voltage range, or performs step 509 if the grid connection voltage is not within the voltage range.

Step 508: The controller clears an active power additional value.

Step 509: The controller clears a reactive power additional value.

Step 510: The controller controls, based on the grid connection current, the grid connection voltage, and a power reference value obtained through adjustment, a converter to output reactive power and active power.

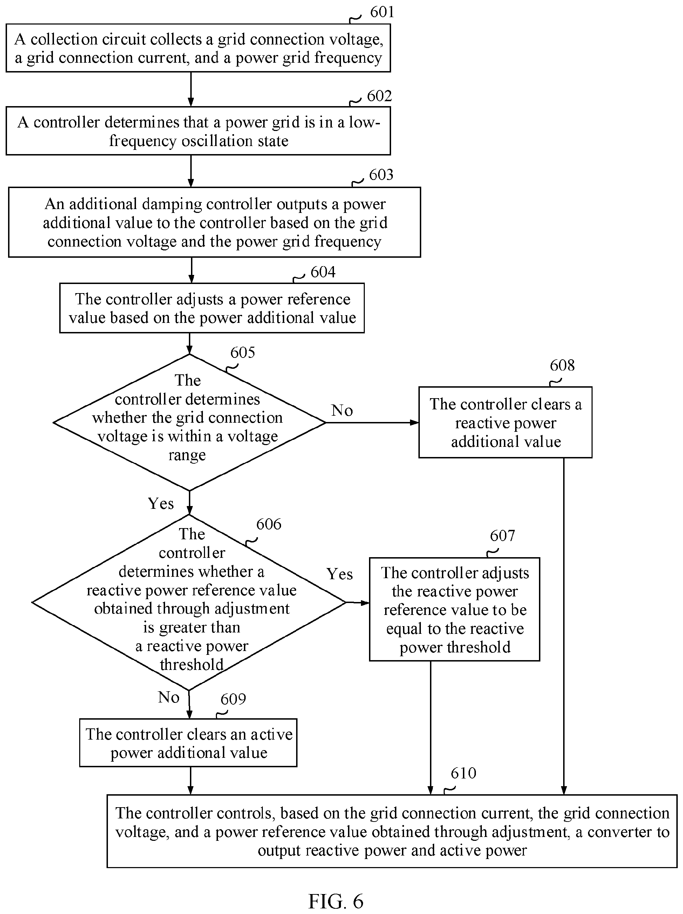

In a possible embodiment, an embodiment of this application provides another low-frequency oscillation suppression method. In the method, active power and reactive power are used to suppress low-frequency oscillation, and a reactive power reference value is preferentially used to change reactive power output for suppressing the low-frequency oscillation. FIG. 6 is a schematic flowchart of another low-frequency oscillation suppression method according to an embodiment of this application. The method specifically includes the following steps.

Step 601: A collection circuit collects a grid connection voltage, a grid connection current, and a power grid frequency.

Step 602: A controller determines that a power grid is in a low-frequency oscillation state.

Step 603: An additional damping controller outputs a power additional value to the controller based on the grid connection voltage and the power grid frequency.

Step 604: The controller adjusts a power reference value based on the power additional value.

Step 605: The controller determines whether the grid connection voltage is within a voltage range, and performs step 606 if the grid connection voltage is within the voltage range, or performs step 608 if the grid connection voltage is not within the voltage range.

Step 606: The controller determines whether a reactive power reference value obtained through adjustment is greater than a reactive power threshold, and performs step 607 if the reactive power reference value obtained through adjustment is greater than the reactive power threshold, or performs step 609 if the reactive power reference value obtained through adjustment is not greater than the reactive power threshold.

Step 607: The controller adjusts the reactive power reference value to be equal to the reactive power threshold.

Step 608: The controller clears a reactive power additional value.

Step 609: The controller clears an active power additional value.

Step 610: The controller controls, based on the grid connection current, the grid connection voltage, and a power reference value obtained through adjustment, a converter to output reactive power and active power.

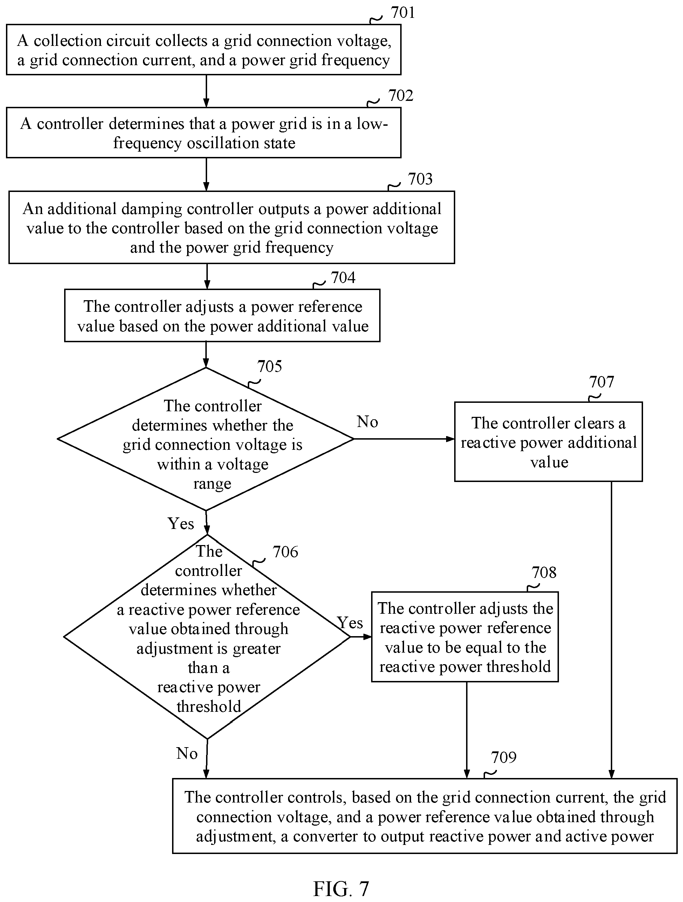

In a possible embodiment, an embodiment of this application provides another low-frequency oscillation suppression method. In the method, reactive power is used to suppress low-frequency oscillation, and active power is not used to suppress the low-frequency oscillation. FIG. 7 is a schematic flowchart of another low-frequency oscillation suppression method according to an embodiment of this application. The method includes the following steps.

Step 701: A collection circuit collects a grid connection voltage, a grid connection current, and a power grid frequency.

Step 702: A controller determines that a power grid is in a low-frequency oscillation state.

Step 703: An additional damping controller outputs a power additional value to the controller based on the grid connection voltage and the power grid frequency.

Step 704: The controller adjusts a power reference value based on the power additional value.

It should be noted that, because the active power is not used to suppress the low-frequency oscillation, an active power additional value is zero.

Step 705: The controller determines whether the grid connection voltage is within a voltage range, and performs step 706 if the grid connection voltage is within the voltage range, or performs step 707 if the grid connection voltage is not within the voltage range.

Step 706: The controller determines whether a reactive power reference value obtained through adjustment is greater than a reactive power threshold, and performs step 708 if the reactive power reference value obtained through adjustment is greater than the reactive power threshold, or performs step 709 if the reactive power reference value obtained through adjustment is not greater than the reactive power threshold.

Step 707: The controller clears a reactive power additional value.

Step 708: The controller adjusts the reactive power reference value to be equal to the reactive power threshold.

Step 709: The controller controls, based on the grid connection current, the grid connection voltage, and a power reference value obtained through adjustment, a converter to output reactive power and active power.

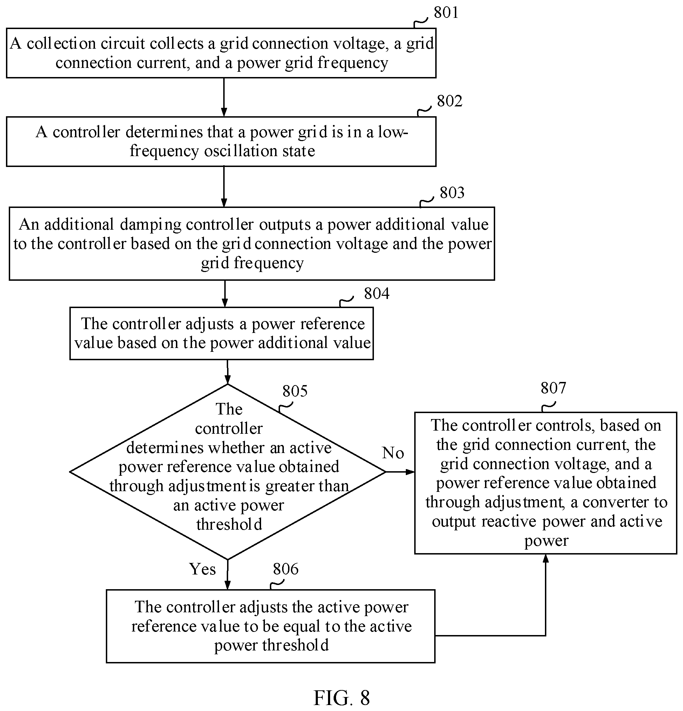

In a possible embodiment, an embodiment of this application provides another low-frequency oscillation suppression method. In the method, active power is used to suppress low-frequency oscillation, and reactive power is not used to suppress the low-frequency oscillation. FIG. 8 is a schematic flowchart of another low-frequency oscillation suppression method according to an embodiment of this application. The method includes the following steps.

Step 801: A collection circuit collects a grid connection voltage, a grid connection current, and a power grid frequency.

Step 802: A controller determines that a power grid is in a low-frequency oscillation state.

Step 803: An additional damping controller outputs a power additional value to the controller based on the grid connection voltage and the power grid frequency.

It should be noted that, because the reactive power is not used to suppress the low-frequency oscillation, a reactive power additional value is zero.

Step 804: The controller adjusts a power reference value based on the power additional value.

Step 805: The controller determines whether an active power reference value obtained through adjustment is greater than an active power threshold, and performs step 806 if the active power reference value obtained through adjustment is greater than the active power threshold, or performs step 807 if the active power reference value obtained through adjustment is not greater than the active power threshold.

Step 806: The controller adjusts the active power reference value to be equal to the active power threshold.

Step 807: The controller controls, based on the grid connection current, the grid connection voltage, and a power reference value obtained through adjustment, a converter to output reactive power and active power.

This application discloses a grid connection inverter system and a low-frequency oscillation suppression method. The grid connection inverter system includes a converter, an additional damping controller, a sampling circuit, and a controller. The converter is separately connected to a direct current input end, a power grid, the controller, and the sampling circuit, the sampling circuit is connected to the additional damping controller, and the controller is connected to the additional damping controller. The converter is configured to output a grid connection voltage and a grid connection current to the power grid. The sampling circuit is configured to detect the grid connection voltage, the grid connection current, and a power grid frequency of the power grid. The additional damping controller is configured to: when the power grid is in a low-frequency oscillation state, output a power additional value to the controller based on the grid connection voltage and the power grid frequency. The controller is configured to adjust, based on a reactive power additional value, a reactive power reference value of reactive power output by the converter, and an active power additional value, an active power reference value of active power output by the converter. When the grid connection voltage is within a specified voltage range and the reactive power reference value is less than or equal to a specified reactive power threshold, the controller clears the active power additional value, and controls, based on the grid connection current, the grid connection voltage and a power reference value obtained through adjustment, the converter to output reactive power and active power. In this solution, when low-frequency oscillation of the power grid is suppressed, the grid connection voltage can be controlled to be within the specified voltage range for outputting reactive power, so that sharp fluctuation of the grid connection voltage caused by a change of the reactive power is avoided, and security of the power grid is further ensured.

In addition, the active power additional value is cleared, so that an energy yield loss caused by a change of active power output can be avoided.

When the grid connection voltage is within the voltage range, the reactive power reference value obtained through adjustment is greater than the reactive power threshold, and the active power reference value obtained through adjustment is less than or equal to the active power threshold, the controller may further adjust the reactive power reference value to be equal to the reactive power threshold, and control, based on the grid connection current, the grid connection voltage, and the power reference value obtained through adjustment, the converter to output the reactive power and the active power. On the premise of reducing grid connection voltage fluctuation, the reactive power may be used in the suppression process of low-frequency oscillation as much as possible, in other words, a variation of the active power is reduced, to reduce an energy yield loss.

When the grid connection voltage is not within the voltage range, the controller may further clear the reactive power additional value, and control, based on the grid connection current, the grid connection voltage, and the power reference value obtained through adjustment, the converter to output the reactive power and the active power. Active power that meets the active power threshold is output to suppress low-frequency oscillation, and a variation of the reactive power is reduced to avoid grid connection voltage fluctuation, and further ensure security of the power grid.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A grid connection inverter system, comprising a converter, an additional damping controller, a sampling circuit, and a controller, wherein the converter is separately connected to a direct current input end, a power grid, the controller, and the sampling circuit, the sampling circuit is connected to the additional damping controller, and the controller is connected to the additional damping controller;
the converter is configured to output a grid connection voltage, a grid connection current, reactive power, and active power to the power grid;
the sampling circuit is configured to collect the grid connection voltage, the grid connection current, and a power grid frequency of the power grid;
the additional damping controller is configured to: when the power grid is in a low-frequency oscillation state, output a power additional value to the controller based on the grid connection voltage and the power grid frequency, wherein the power additional value comprises an active power additional value and a reactive power additional value; and
the controller is configured to adjust, based on the power additional value, the reactive power and the active power that are output by the converter.

2. The system according to claim 1, wherein the controller is configured to:
adjust, based on the reactive power additional value, a reactive power reference value of the reactive power output by the converter, and adjust, based on the active power additional value, an active power reference value of the active power output by the converter, wherein a power reference value comprises the reactive power reference value and the active power reference value; and
control, based on the grid connection current, the grid connection voltage, and a power reference value obtained through adjustment, the converter to output the reactive power and the active power.

3. The system according to claim 2, wherein the controller is configured to:
when the grid connection voltage is within a specified voltage range and a reactive power reference value obtained through adjustment is less than or equal to a specified reactive power threshold, clear the active power additional value.

4. The system according to claim 3, wherein the controller is configured to:
when the grid connection voltage is within the voltage range and the reactive power reference value obtained through adjustment is greater than the reactive power threshold, adjust the reactive power reference value to be equal to the reactive power threshold.

5. The system according to claim 3 or 4, wherein the controller is further configured to:
clear the reactive power additional value when the grid connection voltage is not within the voltage range.

6. The system according to any one of claims 1 to 5, wherein the controller is further configured to:
send an operation instruction to the damping controller when the power grid frequency is within a target frequency range, wherein the operation instruction instructs the power grid to enter the low-frequency oscillation state.

7. The system according to claim 6, wherein the target frequency range is adjusted based on a low-frequency oscillation frequency range and a frequency fluctuation offset value of the power grid.

8. A low-frequency oscillation suppression method, applied to a grid connection inverter system, wherein the grid connection inverter system comprises a converter, an additional damping controller, a sampling circuit, and a controller, wherein the converter is separately connected to a direct current input end, a power grid, the controller, and the sampling circuit, the sampling circuit is connected to the additional damping controller, and the controller is connected to the additional damping controller; and the method comprises:
outputting, by the converter, a grid connection voltage, a grid connection current, reactive power, and active power to the power grid;
collecting, by the collection circuit, the grid connection voltage, the grid connection current, and a power grid frequency of the power grid;
when the power grid is in a low-frequency oscillation state, outputting, by the additional damping controller, a power additional value to the controller based on the grid connection voltage and the power grid frequency, wherein the power additional value comprises an active power additional value and a reactive power additional value; and
adjusting, by the controller based on the power additional value, the reactive power and the active power that are output by the converter.

9. The method according to claim 8, wherein the adjusting, based on the power additional value, the reactive power and the active power that are output by the converter comprises:
adjusting, by the controller, based on the reactive power additional value, a reactive power reference value of the reactive power output by the converter, and adjusting, based on the active power additional value, an active power reference value of the active power output by the converter, wherein a power reference value comprises the reactive power reference value and the active power reference value; and
controlling, based on the grid connection current, the grid connection voltage, and a power reference value obtained through adjustment, the converter to output the reactive power and the active power.

10. The method according to claim 9, wherein the method further comprises:
when the grid connection voltage is within a specified voltage range and a reactive power reference value obtained through adjustment is less than or equal to a specified reactive power threshold, clearing, by the controller, the active power additional value.

11. The method according to claim 10, wherein the method further comprises:
when the grid connection voltage is within the voltage range and the reactive power reference value obtained through adjustment is greater than the reactive power threshold, adjusting, by the controller, the reactive power reference value to be equal to the reactive power threshold.

12. The method according to claim 10 or 11, wherein the method further comprises:
clearing, by the controller, the reactive power additional value when the grid connection voltage is not within the voltage range.

13. The method according to any one of claims 8 to 12, wherein the method further comprises:
sending, by the controller, an operation instruction to the damping controller when the power grid frequency is within a target frequency range, wherein the operation instruction instructs the power grid to enter the low-frequency oscillation state.

14. The method according to claim 13, wherein the target frequency range is adjusted based on a low-frequency oscillation frequency range and a frequency fluctuation offset value of the power grid.
